(19) Europäisches Patentamt
European Patent Office
Office européen des brevets

(11) **EP 3 339 811 B1**

(12) **EUROPÄISCHE PATENTSCHRIFT**

(45) Veröffentlichungstag und Bekanntmachung des Hinweises auf die Patenterteilung:
**20.03.2019 Patentblatt 2019/12**

(51) Int Cl.:
*G01D 5/38* (2006.01)  *G01D 5/347* (2006.01)
*G01B 11/14* (2006.01)  *G02B 26/10* (2006.01)

(21) Anmeldenummer: **16205387.0**

(22) Anmeldetag: **20.12.2016**

(54) **OPTISCHE POSITIONSMESSEINRICHTUNG**

OPTICAL POSITIONING DEVICE

DISPOSITIF OPTIQUE DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.06.2018 Patentblatt 2018/26**

(73) Patentinhaber: **Dr. Johannes Heidenhain GmbH 83301 Traunreut (DE)**

(72) Erfinder: **LEPPERDINGER, Gotthard 5113 St. Georgen (AT)**

(56) Entgegenhaltungen:
**EP-A1- 1 028 309      EP-A2- 0 638 784
DE-B4- 19 754 595      US-A- 4 746 792**

**Beschreibung**

## GEBIET DER TECHNIK

Die vorliegende Erfindung betrifft eine optische Positionsmesseinrichtung nach den Merkmalen des Oberbegriffs des Anspruchs 1.

## STAND DER TECHNIK

Die EP 1 028 309 A1 offenbart eine gattungsbildende optische Positionsmesseinrichtung. Durch das Wechselwirken eines periodischen Lichtmusters mit einer periodischen Messteilung entsteht in einer nachfolgenden Detektionsebene ein Vernier-Streifenmuster. Die Periode des periodischen Lichtmusters weicht hierzu geringfügig von der Teilungsperiode der Messteilung - nachfolgend Messteilungsperiode genannt - ab. Die Periode des daraus generierten Vernier-Streifenmusters - nachfolgend Vernierperiode genannt - ist dabei größer als die Lichtmusterperiode und auch größer als die Messteilungsperiode. Die Messteilung ist als Amplitudengitter ausgebildet und das Steg-Lücken-Verhältnis der Messteilung ist 1:1.

## ZUSAMMENFASSUNG DER ERFINDUNG

Der vorliegenden Erfindung liegt die Aufgabe zugrunde, eine optische Positionsmesseinrichtung anzugeben, mit der ein Vernier-Streifenmuster mit einem verbesserten Signal-Rauschverhältnis erzeugt wird.

Diese Aufgabe wird erfindungsgemäß durch die optische Positionsmesseinrichtung mit den Merkmalen des Anspruchs 1 gelöst.

Diese optische Positionsmesseinrichtung zur Messung der Relativlage zweier in Messrichtung zueinander beweglicher Objekte umfasst eine Messteilung und eine relativ zur Messteilung in Messrichtung beweglichen Abtasteinrichtung. Die Abtasteinrichtung ist dazu ausgebildet ein Lichtmuster mit in Messrichtung abwechselnden Hellbereichen und Dunkelbereichen mit einer Lichtmusterperiode auf die Messteilung zu werfen, wobei die Messteilung eine Messteilungsperiode aufweist, die geringfügig von der Lichtmusterperiode derart abweicht, dass durch das Zusammenwirken des Lichtmusters mit der Messteilung ein Verniermuster erzeugt wird, das Hellbereiche und Dunkelbereiche aufweist, die von einer Detektoranordnung abgetastet werden. Die Messteilung ist dabei ein Phasengitter, dessen Steg-Lückenverhältnis von 1:1 abweicht und dessen Phasenhub zwischen Steg und Lücke derart ausgebildet ist, dass die nullte Beugungsordnung unterdrückt wird. Weiter ist die Positionsmesseinrichtung derart ausgebildet, dass an der Position, an der die nullte Beugungsordnung eines Hellbereichs des auftreffenden Lichtmusters unterdrückt wird zumindest eine höhere Beugungsordnung abgelenkt wird und auf der Detektoranordnung auf einen der Hellbereiche des Verniermusters trifft.

Mit Steg und Lücke des Phasengitters sind dabei die zwei Bereiche innerhalb einer Messteilungsperiode bezeichnet, die das auftreffende Licht unterschiedlich verzögern, um den geforderten Phasenhub zu erreichen. Dieser Phasenhub wird in bekannter Weise eingestellt durch Wegdifferenzen und / oder durch Differenzen im Brechungsindex des Materials, welche das Licht durchlaufen muss.

Mit der Erfindung wird die Intensität der Hellbereiche des Verniermusters erhöht. Aufgrund dieser Signalsteigerung wird ein höheres Nutzsignal generiert, was die Messgenauigkeit der Positionsmesseinrichtung erhöht.

Der Begriff Licht schließt auch Strahlung mit einer Wellenlänge im nichtsichtbaren Bereich ein.

Bevorzugt ist der Steg einer Messteilungsperiode jeweils breiter als die Lücke und der Steg breiter als ein Hellbereich des Lichtmusters. Dadurch ist gewährleistet, dass beim mittigen Auftreffen eines Hellbereichs des Lichtmusters auf diesen Steg dieser vollständig zur Erzeugung des Hellbereichs des Verniermusters genutzt wird, entweder durch vollständige Transmission oder durch vollständige Reflexion.

Alternativ ist die Lücke einer Messteilungsperiode jeweils breiter als der Steg und die Lücke breiter als ein Hellbereich des Lichtmusters. In diesem Fall ist gewährleistet, dass beim mittigen Auftreffen eines Hellbereichs des Lichtmusters auf diese Lücke dieser vollständig zur Erzeugung des Hellbereichs des Verniermusters genutzt wird, entweder durch vollständige Transmission oder durch vollständige Reflexion.

Insbesondere ist der Steg einer Messteilungsperiode jeweils breiter als die Lücke der Messteilungsperiode und die Breite der Lücke der Messteilungsperiode beträgt 50% der Lichtmusterperiode oder alternativ ist die Lücke jeweils breiter als der Steg des Phasengitters, und die Breite des Steges beträgt 50% der Lichtmusterperiode. Bei gleichen optischen Eigenschaften (Transmission oder Reflexion) von Steg und Lücke ist dadurch gewährleistet, dass die nullte Beugungsordnung vollständig durch destruktive Interferenz ausgelöscht wird.

In vorteilhafter Weise ist das Steg-Lückenverhältnis oder das Lücken-Stegverhältnis des Phasengitters 1:3.

Ein besonders einfacher Aufbau der Positionsmesseinrichtung ergibt sich, wenn die Abtasteinrichtung eine Sendeanordnung und ein Gitter aufweist, wobei die Sendeanordnung zur Erzeugung eines kollimierten Lichtstrahlenbündels ausgebildet ist, das auf das Gitter gerichtet ist und das kollimierte Lichtstrahlenbündel durch das Zusammenwirken mit dem Gitter das Lichtmuster erzeugt.

Das Gitter kann ein Amplitudengitter sein, vorzugsweise ist das Gitter aber ein Phasengitter. Alternativ kann das Gitter aber auch ein gemischtes Amplituden-Phasengitter sein.

Der Phasenhub der als Phasengitter ausgebildeten Messteilung ist insbesondere λ/2, mit λ = Wellenlänge des Lichtes des auftreffenden Lichtmusters.

Vorzugsweise umfasst die Detektoranordnung mehrere Detektoren zur Abtastung des Verniermusters und zur Erzeugung von K um 360°/K gegeneinander phasenverschobener Abtastsignale, wobei für den Mittenabstand $X_K$ benachbarter Detektoren gilt

$$X_K = P_V/K,$$

mit

$$1/P_V = |\,1/P_T\text{-}1/P_M\,|$$

$P_V$ = Vernierperiode
$P_T$ = Messteilungsperiode
$P_M$ = Lichtmusterperiode
K = positive ganze Zahl

In an sich bekannter Weise können zur Signalsteigerung und Mittelung mehrere K-te Detektoren der Detektoranordnung zur Bildung eines resultierenden Summen-Abtastsignals miteinander verbunden sein.

Vorteilhafte Ausführungen der Erfindung ergeben sich aus den Maßnahmen, die in den abhängigen Ansprüchen aufgeführt sind.

Weitere Einzelheiten und Vorteile der vorliegenden Erfindung werden anhand der nachfolgenden Beschreibung von Ausführungsbeispielen in Verbindung mit den Figuren erläutert.

## KURZE BESCHREIBUNG DER ZEICHNUNGEN

Es zeigt

Figur 1    eine perspektivische Ansicht einer ersten erfindungsgemäß ausgestalteten optischen Positionsmesseinrichtung;

Figur 2    den Grundaufbau und den Verlauf des Abtast-Strahlengangs der Positionsmesseinrichtung gemäß Figur 1;

Figur 3    das bei der Positionsmesseinrichtung auftretende Beugungsbild in der Detektorebene, und

Figur 4    ein zweites Ausführungsbeispiel einer erfindungsgemäß ausgestalteten optischen Positionsmesseinrichtung.

## BESCHREIBUNG DER AUSFÜHRUNGSFORMEN

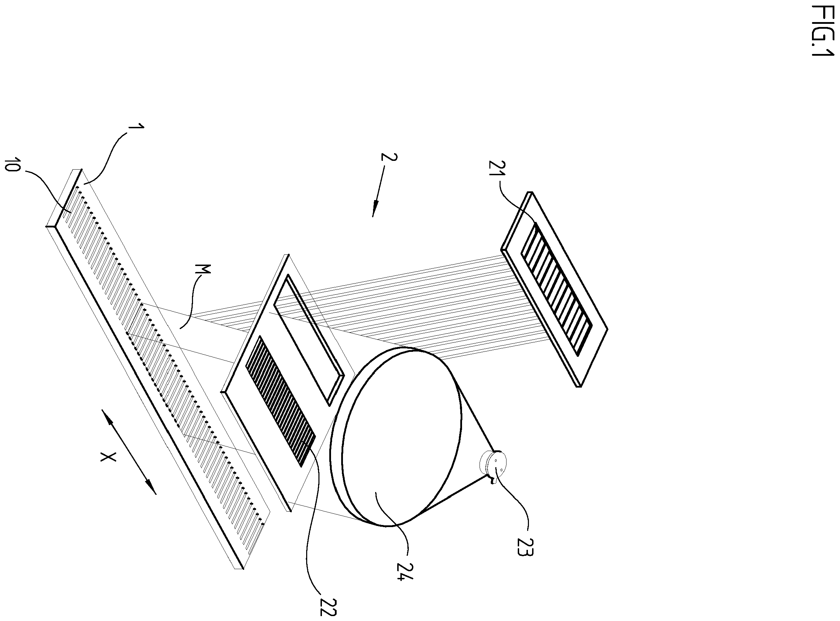

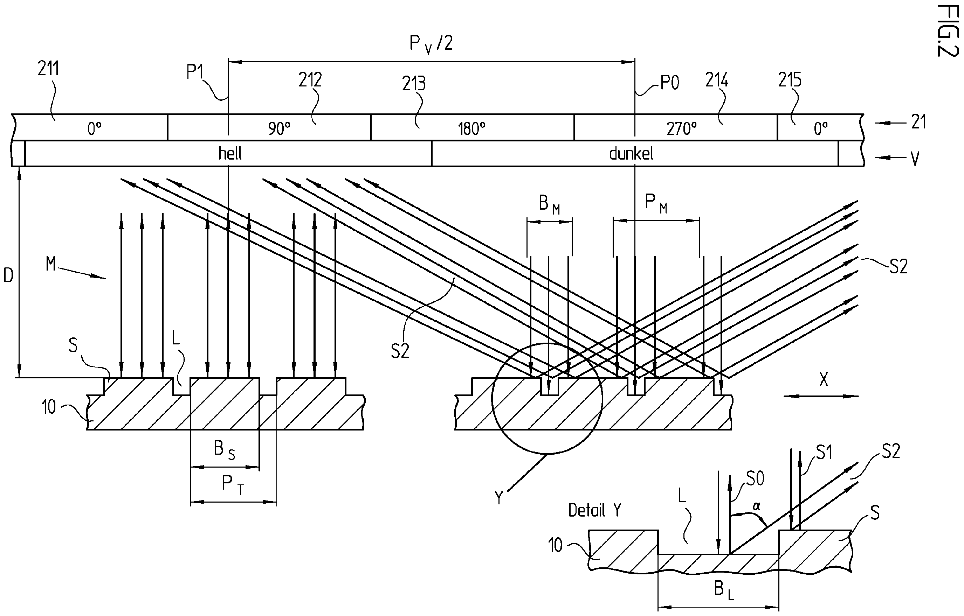

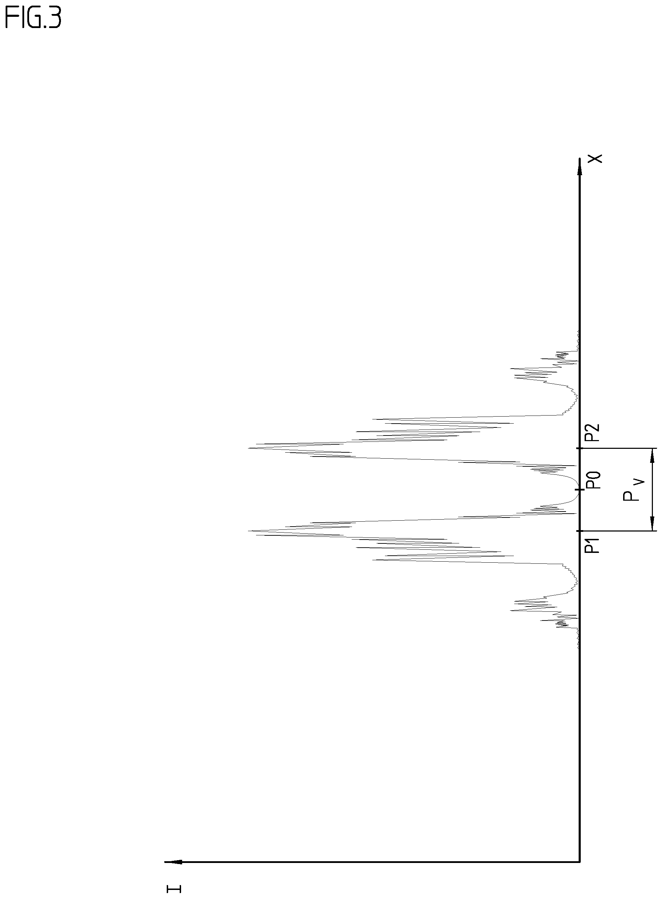

Die Figuren 1 und 2 zeigen ein erstes Ausführungsbeispiel der Erfindung und die Figur 3 das bei diesem ersten Ausführungsbeispiel entstehende Beugungsbild.

Diese optische Positionsmesseinrichtung umfasst eine Messteilung 10, die zur Positionsmessung von einer Abtasteinrichtung 2 im sogenannten Auflicht abgetastet wird. Die reflektierende Messteilung 10 ist in bekannter Weise auf einem Maßstab 1 aufgebracht bzw. daran befestigt. Zur Positionsmessung zweier in Messrichtung X zueinander beweglicher Objekte wird der Maßstab 1 an einem dieser beiden Objekte befestigt und die Abtasteinrichtung 2 am anderen der beiden zueinander beweglichen Objekte befestigt.

Die Abtasteinrichtung 2 ist dazu ausgebildet ein periodisches Lichtmuster M auf die Messteilung 10 zu werfen. Die Periode dieses Lichtmusters M wird nachfolgend Lichtmusterperiode $P_M$ genannt. Die Erzeugung positionsabhängiger Abtastsignale basiert darauf, dass das periodische Lichtmuster M mit der Messteilung 10 zur Erzeugung eines Verniermusters V zusammenwirkt. Die Messteilung 10 weist hierzu eine Messteilungsperiode $P_T$ auf, die geringfügig von der Lichtmusterperiode $P_M$ abweicht, so dass auf einer Detektoranordnung 21 ein Verniermuster V mit einer erheblich größeren Periode $P_V$ als die Lichtmusterperiode $P_M$ sowie die Messteilungsperiode $P_T$ entsteht. Das dabei entstehende Verniermuster V ist parallel zu den Teilungsstrichen der Messteilung 10 orientiert. Das periodische Lichtmuster M erfährt im Fall der Relativbewegung von Abtasteinrichtung 2 und Messteilung 10 eine verschiebungsabhängige Modulation, wobei das periodische Verniermuster V mit Hellbereichen und Dunkelbereichen gebildet wird. Das Verniermuster V wird zur Bestimmung der jeweiligen Relativposition der Messteilung 10 und der Abtasteinrichtung 2 von der Detektoranordnung 21 abgetastet.

Für die Vernierperiode $P_V$ (Periode des entstehenden Verniermusters V) gilt:

$$1/P_V = |\,1/P_T\text{-}1/P_M\,|$$

mit

$P_T$ = Messteilungsperiode (Periode der Messteilung 10)
$P_M$ = Lichtmusterperiode (Periode des Lichtmusters M)

Das Lichtmuster M kann auf unterschiedliche Weise erzeugt werden. Im einfachsten Fall handelt es sich bei der Positionsmesseinrichtung um einen Zweigitter-Geber, bei dem das Lichtmuster M mittels eines Gitters 22 erzeugt wird, das kollimiert beleuchtet wird. Zur kollimierten Beleuchtung sind eine Lichtquelle 23 und eine Optik 24 vorgesehen. Das Gitter 22 ist beispielsweise ein Amplitudengitter mit einer periodischen Abfolge von undurchlässigen Stegen und transparenten Lücken. Die undurchlässigen Stege werden von einer Beschichtung aus opakem Material auf einem transparenten Träger gebildet, wobei der Träger insbesondere ein Glasträger sein kann.

Vorzugsweise ist das Gitter 22 aber ein Phasengitter. Alternativ kann das Gitter 22 aber auch ein gemischtes Amplituden-Phasengitter sein.

Die Teilungsperiode des Gitters 22 entspricht der geforderten Lichtmusterperiode $P_M$ und das Steg-Lückenverhältnis des Gitters 22 ist 1:1 gewählt. Die Breite einer Lücke des Gitters 22 entspricht somit der Breite $B_M$ eines Hellbereichs des periodischen Lichtmusters M und beträgt $P_M / 2$.

Die von der monochromatischen, oder zumindest schmalbandigen Lichtquelle 23 emittierte Strahlung wird mit der Optik 24 parallel gerichtet und durchdringt die transparenten Lücken des Gitters 22. Als Lichtquelle 23 eignet sich insbesondere eine LED oder eine andere schmalbandige Lichtquelle 23.

Erfindungsgemäß ist die Messteilung 10 ein Phasengitter, im ersten Ausführungsbeispiel ein reflektierendes Phasengitter. Dabei werden zur Maximierung der Intensität der Hellbereiche des Verniermusters V bei der Erfindung mehrere Eigenschaften dieses Phasengitters ausgenutzt, nämlich

Geometrische Strahlenoptik:

    1. Reflexion bei reflektierendem Phasengitter und Transmission (geradlinige Ausbreitung) bei Transmissionsgitter

Wellenoptik:

    2. destruktive Interferenz
    3. Beugung

Zu Punkt 1:

Dieser Effekt beruht auf der reinen Reflexion eines auf eine ebene Oberfläche des Phasengitters auftreffenden Strahlenbündels und wird erreicht, indem das Steg-Lückenverhältnis des Phasengitters von 1:1 abweicht. Dadurch wird erreicht, dass die Stege S jeweils eine größere Breite $B_S$ aufweisen als die Breite $B_M$ eines Hellbereichs des Lichtmusters M oder die Lücken L jeweils eine größere Breite $B_L$ aufweisen als die Breite $B_M$ eines Hellbereichs des Lichtmusters M. Im dargestellten Beispiel weisen die Stege S des

Phasengitters eine größere Breite $B_S$ innerhalb einer Messteilungsperiode $P_M$ auf als die Breite $B_M$ eines Hellbereichs des Lichtmusters M, es gilt:

$$B_S > B_M$$

Die Messteilung 10 ist damit für das auftreffende Lichtmuster M wirksam zur ortsabhängigen Modulation der Reflexion. Das auftreffende Lichtmuster M trifft somit bei der in Figur 2 dargestellten Momentanposition P1 auf einen links dargestellten Bereich der Messteilung 10, bei dem die gesamte auftreffende Breite $B_M$ des Hellbereichs des Lichtmusters M von der Messteilung 10 reflektiert wird und auf die Detektoranordnung 21 trifft. Dieser Bereich des auf die Detektoranordnung 21 auftreffenden Verniermusters V wird daher Hellbereich genannt und in der Figur 2 mit "hell" bezeichnet.

Zu Punkt 2:

Ausgenutzt wird hier die destruktive Interferenz eines auf einen Steg S des Phasengitters auftreffenden und davon reflektierten Teilstrahlenbündels S1 mit einem auf eine Lücke L des Phasengitters auftreffenden und davon reflektierten Teilstrahlenbündels S0.

Hierzu ist der Phasenhub zwischen Steg S und Lücke L des Phasengitters derart ausgebildet, dass die nullte Beugungsordnung unterdrückt wird. Derfür das auftreffende Lichtmuster M wirksame Phasenhub zwischen Steg S und Lücke L der Messteilung 10 ist hierzu $\lambda/2$, dabei ist $\lambda$ die Wellenlänge des Lichtmusters M.

Aufgrund der unterschiedlichen Perioden des Lichtmusters M und der Messteilung 10 trifft ein Teil des Lichtmusters M in der in Figur 2 dargestellten Momentanposition P0 auch auf einen in Figur 2 rechts dargestellten Bereich der Messteilung 10. An der Position P0 wird der Hellbereich des auftreffenden Lichtmusters M in Bezug auf Phase und Beugung beeinflusst. Dieser Bereich P0 ist vom Bereich P1 um eine halbe Vernierperiode Pv in Messrichtung X beabstandet. In Bezug auf die Phase erfolgt eine destruktive Interferenz, so dass die nullte Beugungsordnung ausgelöscht wird. Am Ort P0 trifft also kein Licht auf die Detektoranordnung 21. Dieser Bereich des Verniermusters V wird daher Dunkelbereich genannt und ist in der Figur 2 mit "dunkel" bezeichnet.

Vorausgesetzt, dass Steg S und Lücke L der Messteilung 10 gleiche Reflexionseigenschaften aufweisen, sollte zur vollständigen destruktiven Interferenz auch gelten:

    Der Steg S einer Messteilungsperiode $P_T$ ist jeweils breiter ist als die Lücke L der Messteilungsperiode $P_T$, und die Breite $B_L$ der Lücke L beträgt 50% der Lichtmusterperiode $P_M$, oder
    die Lücke L einer Messteilungsperiode $P_T$ ist jeweils breiter ist als der Steg S der Messteilungsperiode $P_T$, und die Breite $B_S$ des Stegs S beträgt 50% der Lichtmusterperiode $P_M$

Im Beispiel ist das Lücken-Stegverhältnis der Messteilung 10 und somit des Phasengitters 1:3. Der gleiche Effekt wird erreicht, wenn das Steg-Lückenverhältnis des Phasengitters 1:3 gewählt wird.

Zu Punkt 3:

Ausgenutzt wird hier die Beugung eines auf das Phasengitter auftreffenden Strahlenbündels, dabei wird die durch Reflexion (wie oben unter Punkt 1 erläutert) erhaltene Intensität der Hellbereiche des Verniermusters V durch eine ortsabhängige Modulation der Beugung am Phasengitter verstärkt.

Wie bereits angeführt, trifft aufgrund der unterschiedlichen Perioden des Lichtmusters M und der Messteilung 10 ein Teil des Lichtmusters M in dem in Figur 2 rechts dargestellten Bereich auf die Messteilung 10. In diesem Bereich der Messteilung 10 wird ein Hellbereich des auftreffenden Lichtmusters M in Bezug auf Phase und Beugung beeinflusst.

In Bezug auf die Beugung wird an der Position P0 zumindest eine der höheren Beugungsordnungen N (N ≠ 0) derart in Messrichtung X abgelenkt, dass diese an der Position P1 - also an einem Hellbereich des Verniermusters V - auf die Detektoranordnung 21 trifft. Diese zumindest eine höhere Beugungsordnung N trifft im Raster der Vernierperiode $P_V$ auf die Detektoranordnung 21. Der Bereich P0 ist vom Bereich P1 um eine halbe Vernierperiode $P_V$ in Messrichtung X beabstandet.

Bei der Dimensionierung der Positionsmesseinrichtung spielen mehrere Parameter eine Rolle:

Für den Beugungswinkel α der N-ten Beugungsordnung gilt

$$\sin \alpha = N * \lambda / P_T$$

Für die in der Praxis relevanten kleinen Beugungswinkel α (in Bogenmaß) gilt:

$$\alpha = N * \lambda / P_T$$

Da das an der Position P0 um den Beugungswinkel α gebeugte Strahlenbündel um $P_V / 2$ versetzt auf der Detektoranordnung 21 auftreffen muss, gilt weiter

$$D * \alpha = P_V / 2$$

und somit für den Abstand D zwischen der Messteilung 10 und der Detektoranordnung 21

$$D = P_V * P_T / (2 * N * \lambda)$$

In der Figur 2 wurden die negativen Beugungsordnungen und die positiven Beugungsordnungen gleicher Ordnung mit S2 gleich bezeichnet, da für die positive Ordnung und die negative Ordnung ausgehend von der Momentanposition P0 jeweils die gleichen Bedingungen gelten.

Anhand eines Versuchsaufbaus wurde die Funktionsfähigkeit der erfindungsgemäßen Positionsmesseinrichtung nachgewiesen. Es wurden folgende Parameter gewählt:

$P_M$ = 20,5128 µm
$P_T$ = 20,00 µm
$P_V$ = 800 µm
λ = 860 nm
Steg-Lückenverhältnis der Messteilung 10 = 3:1

Soll die zweite Beugungsordnung N = 2 erfindungsgemäß genutzt werden, ergibt sich für diese Beugungsordnung ein Beugungswinkel α von etwa 5°.

Bei diesen Bedingungen ergibt sich für den Abstand D zwischen der Messteilung 10 und der Detektoranordnung 21 ein Wert von etwa 4,5 mm. Es hat sich gezeigt, dass die an der Messteilung 10 gebeugten Strahlen S2 die Intensität der Hellbereiche des Verniermusters V auch bei einer Änderung des Abstandes D noch erhöhen. Im Beispiel kann der Abstand D Werte von etwa 3 mm bis 6 mm annehmen, d.h. für D ist eine Toleranz von ± 1,5 mm zulässig.

In der Figur 3 ist das Beugungsbild der an der Messteilung 10 gebeugten Beugungsstrahlen dargestellt. Aufgetragen ist die Intensität I der Beugungsordnungen in Abhängigkeit der Positionen X, wobei die Positionen P0 und P1 den in Figur 2 eingezeichneten Momentanpositionen entsprechen. Zusätzlich ist in Figur 3 die Position P2 eingetragen, dies ist die von P1 um PV beabstandete Position, also das Zentrum des nächsten Hellbereiches des Verniermusters V.

Zur Steigerung der Intensität der Hellbereiche des Verniermusters können geradzahlige und / oder ungeradzahlige Beugungsordnungen (N ≠ 0) genutzt und bei der Auslegung berücksichtigt werden.

Die Detektoranordnung 21 besteht aus mehreren Detektoren 211, 212, 213, 214, 215, die in Messrichtung X benachbart zueinander angeordnet sind. Zur Erzeugung von K gegeneinander phasenverschobenen Abtastsignalen sind K Detektorelemente 211, 212, 213, 214 innerhalb einer Vernierperiode Pv angeordnet.

Allgemein ausgedrückt ist zur Abtastung des Verniermusters V eine Detektoranordnung 21 mit K Detektorelementen zur Erzeugung von K um 360°/K gegeneinander phasenverschobener Abtastsignale angeordnet, wobei der Mittenabstand benachbarter Detektorelemente $X_K = P_V/K$ ist, mit

$$1/P_V = | 1/P_T - 1/P_M |$$

$P_V$ = Vernierperiode
$P_T$ = Messteilungsperiode
$P_M$ = Lichtmusterperiode

Sollen vier jeweils um 90° gegeneinander phasenverschobene Abtastsignale erzeugt werden, sind K=4 Detektorelemente 211, 212, 213, 214 innerhalb einer Vernierperiode $P_V$ anzuordnen.

Detektorelemente 211, 215 der Detektoranordnung 21, die jeweils phasengleiche Abtastsignale bei der Abtastung des Verniermusters V liefern, können elektrisch miteinander verbunden werden und zu einem resultierenden Abtastsignal aufsummiert werden. Anders ausgedrückt:

Mehrere K-te Detektorelemente 211, 215 der Detektoranordnung 21 können jeweils zur Bildung eines resultierenden Summen-Abtastsignals miteinander verbunden werden.

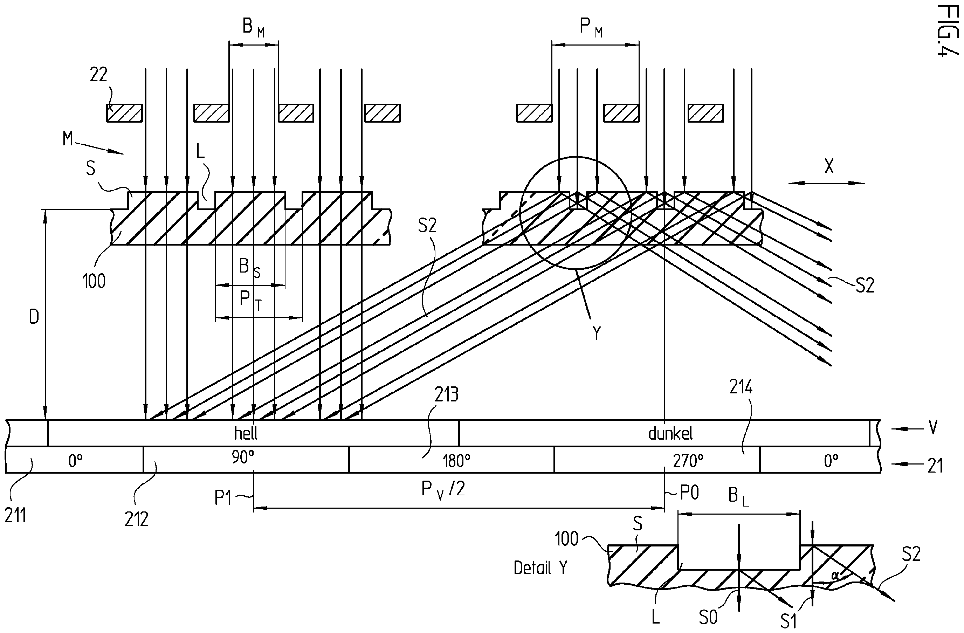

Bei dem ersten Ausführungsbeispiel ist die Messteilung 10 als reflektierendes Phasengitter ausgeführt. Die Figur 4 zeigt, dass die Erfindung auch im Durchlicht eingesetzt werden kann, dabei ist die Messteilung 100 als transparentes Phasengitter ausgeführt.

Für dieses zweite Ausführungsbeispiel gelten die gleichen Bedingungen wie beim ersten Ausführungsbeispiel erläutert, weshalb nur für die Messteilung ein anderes Bezugszeichen verwendet wurde, die übrigen Bezeichnungen aber übernommen wurden.

Bei Verwendung eines Reflexionsgitters als Phasengitter (Messteilung 10) entstehen die Hellbereiche des Verniermusters V an den Positionen P1 des Phasengitters, an denen die Hellbereiche des Lichtmusters M vollständig zurückreflektiert. Im Gegensatz dazu entstehen die Hellbereiche des Verniermusters V bei Verwendung eines Transmissionsgitters als Phasengitter (Messteilung 100) an den Positionen P1, an denen die Hellbereiche des Lichtmusters M vollständig hindurchtritt.

Bei Verwendung eines Reflexionsgitters als Phasengitter (Messteilung 10) entstehen die Dunkelbereiche des Verniermusters V an den Positionen P0 des Phasengitters, an denen die Hellbereiche des Lichtmusters M durch destruktive Interferenz von reflektierten Teilstrahlenbündeln S0, S1 ausgelöscht werden (Figur 2). Im Gegensatz dazu entstehen die Dunkelbereiche des Verniermusters V bei Verwendung eines Transmissionsgitters als Phasengitter (Messteilung 100) an den Positionen P0, an denen die Hellbereiche des Lichtmusters M durch destruktive Interferenz von transmittierten Teilstrahlenbündeln S0, S1 ausgelöscht werden (Figur 4).

Bei Verwendung eines Reflexionsgitters als Phasengitter (Messteilung 10) werden die an den Positionen P1, P2 des Phasengitters entstehenden Hellbereiche des Verniermusters V verstärkt durch Beugungsstrahlen, die am Phasengitter an Positionen P0 durch Reflexion abgebeugt werden. Im Gegensatz dazu werden bei Verwendung eines Transmissionsgitters als Phasengitter (Messteilung 100) die an den Positionen P1, P2 des Phasengitters entstehenden Hellbereiche des Verniermusters V verstärkt durch Beugungsstrahlen, die am Phasengitter an Positionen P0 durch Transmission abgebeugt werden.

Die Erfindung ist bei Längenmesseinrichtungen zur Messung von linearen Bewegungen und Positionen sowie bei Winkelmesseinrichtungen zur Messung von rotatorischen Bewegungen und Positionen einsetzbar.

**Patentansprüche**

1. Optische Positionsmesseinrichtung zur Messung der Relativlage zweier in Messrichtung (X) zueinander beweglicher Objekte, mit einer Messteilung (10, 100) und einer relativ zur Messteilung (10, 100) in Messrichtung (X) beweglichen Abtasteinrichtung (2) mit einer Lichtquelle (23) und einer Detektoranordnung (21), wobei die Abtasteinrichtung (2) dazu ausgebildet ist ein Lichtmuster (M) mit in Messrichtung (X) abwechselnden Hellbereichen und Dunkelbereichen mit einer Lichtmusterperiode ($P_M$) auf die Messteilung (10, 100) zu werfen, wobei die Messteilung (10, 100) eine Messteilungsperiode ($P_T$) aufweist, die geringfügig von der Lichtmusterperiode ($P_M$) derart abweicht, dass durch das Zusammenwirken des Lichtmusters (M) mit der Messteilung (10, 100) ein Verniermuster (V) erzeugt wird, das Hellbereiche und Dunkelbereiche aufweist, die von der Detektoranordnung (21) abgetastet werden, **dadurch gekennzeichnet, dass**
die Messteilung (10, 100) ein Phasengitter ist, dessen Verhältnis von Stegbreite ($B_S$) zu Lückenbreite ($B_L$) von 1:1 abweicht, indem der Steg (S) einer Messteilungsperiode ($P_T$) jeweils breiter ist als die Lücke (L), und der Steg (S) breiter ist als ein Hellbereich des Lichtmusters (M), oder indem die Lücke (L) einer Messteilungsperiode ($P_T$) jeweils breiter ist als der Steg (S), und die Lücke (L) breiter ist als ein Hellbereich des Lichtmusters (M), und dass
der Phasenhub zwischen Steg (S) und Lücke (L) des Phasengitters derart ausgebildet ist, dass die nullte Beugungsordnung unterdrückt wird, und dass
die Positionsmesseinrichtung derart ausgebildet ist, dass an der Position (P0), an der die nullte Beugungsordnung eines Hellbereichs des auftreffenden Lichtmusters (M) unterdrückt wird, zumindest eine höhere Beugungsordnung abgelenkt wird und auf der Detektoranordnung (21) auf einen der Hellbereiche des Verniermusters (V) trifft.

2. Optische Positionsmesseinrichtung nach Anspruch 1, wobei der Steg (S) einer Messteilungsperiode ($P_T$) jeweils breiter ist als die Lücke (L) der Messteilungsperiode ($P_T$) und die Breite ($B_L$) der Lücke (L) der Messteilungsperiode ($P_T$) 50% der Lichtmusterperiode ($P_M$) beträgt, oder wobei
die Lücke (L) jeweils breiter ist als der Steg (S) des Phasengitters, und die Breite ($B_S$) des Steges (S) 50% der Lichtmusterperiode ($P_M$) beträgt.

3. Optische Positionsmesseinrichtung nach einem der vorhergehenden Ansprüche, wobei das Verhältnis von Stegbreite ($B_S$) zu Lückenbreite ($B_L$) oder das Verhältnis von Lückenbreite ($B_L$) zu Stegbreite ($B_S$) des Phasengitters 1:3 ist.

4. Optische Positionsmesseinrichtung nach einem der vorhergehenden Ansprüche, wobei der Phasenhub des Phasengitters $\lambda/2$ ist.

5. Optische Positionsmesseinrichtung nach einem der vorhergehenden Ansprüche, wobei die Abtasteinrichtung (2) eine Sendeanordnung (23, 24) und ein Gitter (22) aufweist, und wobei die Sendeanordnung (23, 24) die Lichtquelle (23) und eine Optik (24) umfasst und zur Erzeugung eines kollimierten Lichtstrahlenbündels ausgebildet ist, das auf das Gitter (22) gerichtet ist und das kollimierte Lichtstrahlenbündel durch das Wechselwirken mit dem Gitter (22) das Lichtmuster (M) erzeugt.

6. Optische Positionsmesseinrichtung nach Anspruch 5, wobei das Verhältnis von Stegbreite ($B_S$) zu Lückenbreite ($B_L$) des Gitters (22) zur Erzeugung des Lichtmusters (M) 1:1 beträgt.

7. Optische Positionsmesseinrichtung nach einem der Ansprüche 5 oder 6, wobei das Gitter (22) zur Erzeugung des Lichtmusters (M) ein Amplitudengitter oder ein Phasengitter ist.

8. Optische Positionsmesseinrichtung nach einem der vorhergehenden Ansprüche, wobei die Detektoranordnung (21) mehrere Detektoren (211, 212, 213, 214, 215) zur Abtastung des Verniermusters (V) und zur Erzeugung von K um 360°/K gegeneinander phasenverschobener Abtastsignale umfasst, wobei für den Mittenabstand $X_K$ benachbarter Detektoren (211, 212, 213, 214, 215) gilt

$$X_K = P_V/K,$$

mit

$$1/P_V = |\,1/P_T - 1/P_M\,|$$

$P_V$ = Vernierperiode
$P_T$ = Messteilungsperiode
$P_M$ = Lichtmusterperiode

9. Optische Positionsmesseinrichtung nach Anspruch 8, wobei jeweils mehrere K-te Detektoren (211, 215) der Detektoranordnung (21) zur Bildung eines resultierenden Summen-Abtastsignals miteinander verbunden sind.

**Claims**

1. Optical position measuring device for measuring the relative position of two objects which are movable with respect to one another in a measurement direction (X), having a measurement graduation (10, 100) and a scanning device (2) which is movable relative to the measurement graduation (10, 100) in the measurement direction (X) and which has a light source (23) and a detector arrangement (21), wherein the scanning device (2) is configured to cast a light pattern (M) with bright regions and dark regions, which alternate in the measurement direction (X), with a light pattern period ($P_M$) onto the measurement graduation (10, 100), wherein the measurement graduation (10, 100) has a measurement graduation period ($P_T$) which deviates slightly from the light pattern period ($P_M$) such that, owing to the interaction of the light pattern (M) with the measurement graduation (10, 100), a vernier pattern (V) is produced, which has bright regions and dark regions that are scanned by the detector arrangement (21), **characterized in that**
the measurement graduation (10, 100) is a phase grating, having a ratio of ridge width ($B_S$) to gap width ($B_L$) which deviates from 1:1, by way of the ridge (S) of a measurement graduation period ($P_T$) being wider in each case than the gap (L), and the ridge (S) being wider than a bright region of the light pattern (M), or by way of the gap (L) of a measurement graduation period ($P_T$) being wider in each case than the ridge (S), and the gap (L) being wider than a bright region of the light pattern (M), and **in that**
the phase deviation between ridge (S) and gap (L) of the phase grating is configured such that the zero order of diffraction is suppressed, and **in that**
the position measuring device is configured such that, at the position (P0), at which the zero order of diffraction of a bright region of the incident light pattern (M) is suppressed, at least one higher order of diffraction is deflected and incident on one of the bright regions of the vernier pattern (V) on the detector arrangement (21).

2. Optical position measuring device according to Claim 1, wherein the ridge (S) of a measurement graduation period ($P_T$) is wider in each case than the gap (L) of the measurement graduation period ($P_T$) and the width ($B_L$) of the gap (L) of the measurement graduation period ($P_T$) is 50% of the light pattern period ($P_M$),
Or wherein
the gap (L) is wider in each case than the ridge (S) of the phase grating, and the width ($B_S$) of the ridge (S) is 50% of the light pattern period ($P_M$).

3. Optical position measuring device according to one of the preceding claims, wherein the ratio of ridge width ($B_S$) to gap width ($B_L$) or the ratio of gap width ($B_L$) to ridge width ($B_S$) of the phase grating is 1:3.

4. Optical position measuring device according to one of the preceding claims, wherein the phase deviation of the phase grating is λ/2.

5. Optical position measuring device according to one of the preceding claims, wherein the scanning device (2) includes a transmission arrangement (23, 24) and a grating (22), and wherein the transmission arrangement (23, 24) comprises the light source (23) and an optical unit (24) and is configured for producing a collimated light beam which is directed at the grating (22) and the collimated light beam produces the light pattern (M) by way of interaction with the grating (22).

6. Optical position measuring device according to Claim 5, wherein the ratio of ridge width (Bs) to gap width ($B_L$) of the grating (22) for producing the light pattern (M) is 1:1.

7. Optical position measuring device according to either of Claims 5 and 6, wherein the grating (22) for producing the light pattern (M) is an amplitude grating or a phase grating.

8. Optical position measuring device according to one of the preceding claims, wherein the detector arrangement (21) comprises a plurality of detectors (211, 212, 213, 214, 215) for scanning the vernier pattern (V) and for producing K scanning signals which are phase-shifted with respect to one another by 360°/K, wherein, for the centre distance $X_K$ of neighbouring detectors (211, 212, 213, 214, 215),

$$X_K = P_V / K,$$

with

$$1/P_V = \left| 1/P_T - 1/P_M \right|$$

$P_V$ = vernier period
$P_T$ = measurement graduation period
$P_M$ = light pattern period.

9. Optical position measuring device according to Claim 8, wherein in each case a plurality of K-th detectors (211, 215) of the detector arrangement (21) are connected to one another for forming a resulting sum scan signal.

**Revendications**

1. Dispositif de mesure de position optique destiné à mesurer la position relative de deux objets mobiles l'un par rapport à l'autre dans une direction de mesure (x), comprenant une graduation de mesure (10, 100) et un dispositif de balayage (2) mobile dans la direction de mesure (x) par rapport à la graduation de mesure (10, 100) et comprenant une source de lumière (23) et un arrangement détecteur (21), le dispositif de balayage (2) étant configuré pour projeter sur la graduation de mesure (10, 100) un motif lumineux (M) ayant des zones claires et des zones foncées alternantes dans la direction de mesure (X) avec une période de motif lumineux ($P_M$), la graduation de mesure (10, 100) possédant une période de graduation de mesure ($P_T$) qui diffère légèrement de la période de motif lumineux ($P_M$) de telle sorte que la coopération du motif lumineux (M) avec la graduation de mesure (10, 100) produit un motif de vernier (V) qui possède des zones claires et des zones sombres qui sont balayées par l'arrangement détecteur (21),
**caractérisé en ce que**
la graduation de mesure (10, 100) est un réseau de phase dont le rapport entre la largeur de trait ($B_S$) et la largeur d'intervalle ($B_L$) est différent de 1:1 par le fait que le trait (S) d'une période de graduation de mesure ($P_T$) est respectivement plus large que l'intervalle (L) et le trait (S) est plus large qu'une zone claire du motif lumineux (M), ou par le fait que l'intervalle (L) d'une période de graduation de mesure ($P_T$) est respectivement plus large que le trait (S) et l'intervalle (L) est plus large qu'une zone claire du motif lumineux (M), et **en ce que**
l'écart de phase entre le trait (S) et l'intervalle (L) du réseau de phase est configuré de telle sorte que la diffraction d'ordre nul est inhibée, et **en ce que** le dispositif de mesure de position est configuré de telle sorte qu'à la position (P0) à laquelle la diffraction d'ordre nul d'une zone claire du motif lumineux (M) incident est inhibée, au moins un ordre de diffraction supérieur est dévié et vient frapper l'arrangement détecteur (21) sur une des zones claires du motif de vernier (V).

2. Dispositif de mesure de position optique selon la revendication 1, le trait (S) d'une période de graduation de mesure ($P_T$) étant respectivement plus large que l'intervalle (L) de la période de graduation de mesure ($P_T$) et la largeur ($B_L$) de l'intervalle (L) de la période de graduation de mesure ($P_T$) étant égale à 50 % de la période de motif lumineux ($P_M$),
ou
l'intervalle (L) étant respectivement plus large que le trait (S) du réseau de phase et la largeur ($B_S$) du trait (S) étant égale à 50 % de la période de motif lumineux ($P_M$).

3. Dispositif de mesure de position optique selon l'une des revendications précédentes, le rapport entre la largeur de trait ($B_S$) et la largeur d'intervalle ($B_L$) ou le rapport entre la largeur d'intervalle ($B_L$) et la largeur de trait ($B_S$) du réseau de phase étant de 1:3.

4. Dispositif de mesure de position optique selon l'une des revendications précédentes, l'écart de phase du réseau de phase étant de $\lambda/2$.

5. Dispositif de mesure de position optique selon l'une des revendications précédentes, le dispositif de balayage (2) possédant un arrangement émetteur (23, 24) et un réseau (22), et l'arrangement émetteur (23, 24) comportant la source de lumière (23) et une optique (24) et étant configuré pour générer un faisceau de rayons lumineux collimaté qui est dirigé sur le réseau (22) et le faisceau de rayons lumineux collimaté générant le motif lumineux (M) par l'interaction avec le réseau (22).

6. Dispositif de mesure de position optique selon la revendication 5, le rapport entre la largeur de trait ($B_S$) et la largeur d'intervalle ($B_L$) du réseau (22) destiné à générer le motif lumineux (M) étant de 1:1.

7. Dispositif de mesure de position optique selon l'une des revendications 5 ou 6, le réseau (22) destiné à générer le motif lumineux (M) étant un réseau d'amplitude ou un réseau de phase.

8. Dispositif de mesure de position optique selon l'une des revendications précédentes, l'arrangement détecteur (21) comportant plusieurs détecteurs (211, 212, 213, 214, 215) destinés à balayer le motif de vernier (V) et à générer K signaux de balayage déphasés de 360°/K les uns des autres, l'équation suivante s'appliquant pour la distance entre centres $X_K$ des détecteurs (211, 212, 213, 214, 215) voisins :

$$X_K = P_V/K,$$

où

$$1/P_V = |1/P_T - 1/P_M|$$

$P_V$ = période de vernier
$P_T$ = période de graduation de mesure
$P_M$ = période de motif lumineux.

9. Dispositif de mesure de position optique selon la revendication 8, plusieurs K-èmes détecteurs (211, 215) de l'arrangement détecteur (21) étant respectivement reliés entre eux en vue de former un signal de balayage total résultant.

FIG.1

FIG.2

FIG.3

FIG.4

**IN DER BESCHREIBUNG AUFGEFÜHRTE DOKUMENTE**

**In der Beschreibung aufgeführte Patentdokumente**

- EP 1028309 A1